# EUROPÄISCHE PATENTSCHRIFT

(11) **EP 3 015 359 B1**
(45) Veröffentlichungstag und Bekanntmachung des Hinweises auf die Patenterteilung: **15.04.2020**
(21) Anmeldenummer: 14191356.6
(22) Anmeldetag: 31.10.2014
(51) Int. Cl.: B64C 1/06, B64F 5/00

(54) **Vorrichtung zur Fixierung und elektrischen Kontaktierung eines Verkleidungselements eines Luftfahrzeugs an einer Tragstruktur**
Device for fixing and making electrical contact between a cladding element of an aircraft and a support structure
Dispositif de fixation et mise en contact électrique d'un carénage d'un aéronef sur une structure porteuse

(43) Veröffentlichungstag der Anmeldung: 04.05.2016
(73) Patentinhaber: Airbus Defence and Space GmbH, 85521 Ottobrunn (DE)
(72) Erfinder: Wulfhorst, Leonardo, 20253 Hamburg (DE); Ischdonat, Nils, 22529 Hamburg (DE); Rollfink, Patrick, 22765 Hamburg (DE)
(74) Vertreter: Isarpatent

(56) Entgegenhaltungen:
- EP-A1- 1 783 870
- WO-A1-93/20601
- WO-A1-99/62146
- DE-A1- 19 730 323
- DE-A1-102010 045 590
- DE-A1-102011 009 815

## Beschreibung

Die Erfindung betrifft eine Vorrichtung zur Fixierung und elektrischen Kontaktierung eines Verkleidungselements eines Luftfahrzeugs an einer Tragstruktur, die an einer Struktur des Luftfahrzeugs befestigt ist.

Gattungsbildende Vorrichtungen sind im Stand der Technik bekannt. Gegenwärtig ist es üblich, Interieurkomponenten eines Luftfahrzeugs, beispielsweise Verkleidungselemente, Lichtbänder, Gepäckablagen etc., einzeln an einer Tragstruktur zu befestigen, welche wiederum ihrerseits an einer Struktur des Luftfahrzeugs angeordnet ist. Häufig benötigen moderne Interieurkomponenten neben einem reinen Befestigungssystem zusätzlich Anschlüsse an eine Strom- und/oder Datenversorgungsleitung, welche typischerweise als Teil eines luftfahrzeugseitigen Bordnetzes ausgebildet ist. Aus der Druckschrift DE 10 2011 009 815 A1 geht ein Flugzeuginterieurkomponentensystem hervor, welches eine Flugzeuginterieurkomponente, einen ersten Strukturhalter, der an einem Element der Flugzeugstruktur befestigt ist, sowie einen an der Flugzeuginterieurkomponente befestigten und zu dem ersten Komponentenhalter komplementären ersten Komponentenhalter umfasst. Das Flugzeuginterieurkomponentensystem ist offenbarungsgemäß dadurch gekennzeichnet, dass die Flugzeuginterieurkomponente mindestens einen Versorgungsleitungsabschnitt umfasst, der mit einer an der Flugzeuginterieurkomponente angeordneten ersten Anschlussvorrichtung verbunden ist, wobei die erste Anschlussvorrichtung dazu eingerichtet ist, mit einer zu der ersten Anschlussvorrichtung komplementären zweiten Anschlussvorrichtung zusammenzuwirken, um den Versorungsleitungsabschnitt der Flugzeuginterieurkomponente mit einem entsprechenden fleugzeugseitigen Versorgungsleitungsabschnitt zu verbinden. Aus der Druckschrift DE 10 2010 026 683 A1 geht ein Interieurkomponententrägersystem zur Verwendung bei der Montage von Flugzeuginterieurkomponenten in einem Flugzeug hervor, umfassend ein Haltesystem mit mindestens einem Halteelement, an dem eine erste Verbindungsvorrichtung zur Verbindung des Halteelements mit einer ersten Flugzeuginterieurkomponente und eine zweite Verbindungsvorrichtung angeordnet sind, wobei an dem Halteelement ferner ein Strukurhalter zur Befestigung des Halteelements an einer Flugzeugstruktur vorgesehen ist. Aus dem zitierten Stand der Technik ergeben sich folglich Vorrichtungen, welche über jeweilige Haltesysteme an einer Flugzeugstruktur befestigbar sind, und, zumindest in der Druckschrift DE 10 2011 009 815 A1, Versorgungsanschlüsse umfassen, die für einen Anschluss an ein flugzeugseitiges Versorgungsnetz ausgebildet sind.

Die DE 10 2010 045 590 A1 beschreibt eine Vorrichtung zur Befestigung eines elektrischen Gerätes an einem Monument in einem Flugzeug, mit der auch die Herstellung einer elektrischen Verbindung zwischen dem elektrischen Gerät und dem Monument gewährleistet wird.

Die EP 1 783 870 A1 beschreibt ein Bauteil mit einem Träger und einem Kontakthalter, der an einer Vorderseite des Trägers in einer Verbindungsrichtung beweglich gelagert ist.

Die WO 93/20601 A1 beschreibt eine Verriegelung mit einer Befestigungsstruktur, einer elektrischen Durchführung und einer Fern- und/oder Verriegelungssicherung.

Die DE 19 730 323 A1 beschreibt eine Konstruktion zum Verbinden von Steckverbindern mit einem Vorsprung mit einem Endverbinder, während eine schräge Führung, die dem Vorsprung entspricht, an einem Verbinderteil ausgebildet ist.

Die WO 99/62146 beschreibt ein Kontaktelement mit elektrischen oder fluidischen Kontaktmitteln, die durch ein elastisches Mittel, in das das Kontaktmittel zumindest teilweise eingebettet ist und durch dessen Oberfläche das Kontaktmittel freiliegt, verschiebbar sind.

Überlicherweise ist die Schnittstelle zwischen dem flugzeugseitigen Versorgungsnetz und den entsprechenden Interieurkomponenten als Steckverbindung ausgeführt, die im Rahmen einer Endmontage des Flugzeugs gesonderten Montageaufwand erzeugt, wobei die entsprechenden Steckverbindungen häufig erschwerend in wenig zugänglichen Bereichen der Interieurkomponenten angeordnet sind.

Aufgabe der Erfindung ist es daher, eine Vorrichtung anzugeben, welche die im Stand der Technik genannten Gesichtspunkte weitestgehend vermeidet, also eine Vorrichtung offenbart, welche neben einer Befestigung einer Flugzeuginterieurkomponente an einer flugzeugseitigen Tragstruktur eine durch die Befestigung herstellbare Verbindung an ein flugzeugseitiges Versorgungssystem ermöglicht, ohne hierfür zusätzlichen Montageaufwand hervorzurufen.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist mit einer Vorrichtung zur Fixierung und elektrischen Kontaktierung eines Verkleidungselements eines Luftfahrzeugs an einer Tragstruktur, die an einer Flugzeugstruktur befestigt ist, umfassend eine Fixiereinrichtung zur lösbaren Fixierung des Verkleidungselements an der Tragstruktur und eine Kontaktierungseinrichtung zur Bereitstellung mehrerer elektrischer Kontakte zwischen verkleidungselementseitigen Leitungen und tragstrukturseitigen Anschlussleitungen, dadurch gelöst, dass die Fixiereinrichtung mittels einer translatorischen Relativbewegung zwischen Verkleidungselement und Tragstruktur in einen formschlüssigen Eingriff bringbar ist, und die Kontaktierungseinrichtung mindestens zwei verkleidungselementseitige erste Kontakte und die gleiche Anzahl damit kooperierende tragstrukturseitige zweite Kontakte aufweist, die bei der translatorischen Relativbewegung jeweils miteinander in elektrischen Kontakt bringbar sind, wobei die ersten Kontakte mit den verkleidungselementseitigen Leitungen und die zweiten Kontakte mit den tragstrukturseitigen Leitungen verbunden sind. Erfindungsgemäß wird durch eine translatorische Relativbewegung zwischen dem Verkleidungselement und der Tragstruktur ein formschlüssiger Eingriff erwirkt, der das Verkleidungselement an der Tragstruktur befestigt. Der formschlüssige Eingriff ist lösbar gestaltet, so dass eine einfache Austauschbarkeit des Verkleidungselements gewährleistet ist. Über eine Kontaktierungseinrichtung wird gleichzeitig mit dem formschlüssigen Eingriff eine elektrische Verbindung zwischen verkleidungselementseitigen ersten Kontakten und tragstrukturseitigen zweiten Kontakten hergestellt, so dass keine zusätzlichen Montageschritte, wie beispielsweise gesondertes Herstellen von Steckverbindung in schlecht zugänglichen Bauräumen, notwendig sind. Die ersten Kontakte sind mit verkleidungselementseitigen Leitungen verbunden, welche vorteilhaft an einen verkleidungselementseitigen Bedarfsort, beispielsweise zur elektrischen Betätigung einer Jalousie, weitergeleitet werden. Tragstrukturseitig sind die zweiten Kontakte mit Leitungen verbunden, welche über die Tragstruktur an ein flugzeugseitiges Bordnetz angeschlossen sind.

In einem weiterführenden Aspekt der Erfindung ist das Verkleidungselement als Verkleidungspaneel, insbesondere als Seitenverkleidungspaneel, ausgestaltet. In dieser Ausführungsform eignet sich eine erfindungsgemäße Vorrichtung insbesondere zum innenseitigen Verkleiden einer Flugzeugkabine, wobei bevorzugt je nach Anforderungssituation an dem Verkleidungselement eine unterschiedliche Anzahl an Kontakten angeordnet ist. So ist es beispielsweise denkbar, dass bei einer Anwendung der erfindungsgemäßen Vorrichtung zur Innenverkleidung eines Passagierbereichs einer Flugzeugkabine mehr Kontakte angeordnet werden müssen als bei einer Anwendung zur Innenverkleidung eines Frachtbereichs, da in einem Passagierbereich mit einer erhöhten Nachfrage nach elektrischen Zuleitungen für vielfältige Unterhaltungs- und Komfortfunktionen zu rechnen ist.

Erfindungsgemäß ist vorgesehen, dass die Tragstruktur als Trägerplatte mit einem hinterschnittenen Vertikalschlitz ausgeführt ist und an dem Verkleidungselement ein einführbares Fixierelement mit einem in den Hinterschneidungsbereich bringbaren Kopf angeordnet ist. Dabei ist das Fixierungselement vorzugsweise derart ausgeführt, dass es auf Grund seiner kopfartigen Außengeometrie genau in den hinterschnittenen Vertikalschlitz durch eine vertikale translatorische Relativbewegung einführbar ist und bei Erreichen einer Montageendposition einen Formschluss mit der Trägerplatte bildet. Darüber hinaus umfasst die Kontaktierungseinrichtung mehrere auf dem Kopf angeordnete elastisch abstehende erste Kontakte, welche derart ausgebildet und eingerichtet sind, dass sie mit mehreren zweiten Kontakten, welche an einer Rückwand des Vertikalschlitzes befestigt sind, komplementär zusammenwirken. Auf Grund des elastischen Abstehens der ersten Kontakte baut sich im formschlüssigen Eingriff des Verkleidungselements mit der Trägerplatte eine federnde Gegenkraft auf, wodurch die verkleidungselementseitigen ersten Kontakte auf die tragstrukturseitigen gegenkraftartig zweiten Kontakte gedrückt werden.

In einer Ausführungsform sind die tragstrukturseitigen zweiten Kontakte vorteilhaft streifenartig ausgebildet, wodurch eine Kontaktbildung bei vertikaler translatorischer Relativbewegung des Verkleidungselements zur Tragstruktur in Translationsrichtung begünstigt wird. Zudem ergibt sich dadurch der Vorteil, dass ein elektrischer Kontakt nicht erst bei Erreichen der Montageendposition des Verkleidungselements in der Tragstruktur, sondern bereits zuvor erreicht wird, so dass etwaige Bauteiltoleranzen ausgeglichen werden können.

Erfindungsgemäß sind die verkleidungselementseitigen zweiten Kontakte in Längsschlitzen angeordnet, die in einer Rückwand des Vertikalschlitzes ausgebildet sind. Auf diese Weise erhalten die verkleidungselementseitigen ersten Kontakte den in ihrem komplementären tragstrukturseitigen Gegenstück benötigten Bauraum, so dass das Verkleidungselement nicht zusätzlich in Richtung des zu verkleidenden Bereichs des Flugzeugs ragt.

Ebenso vorteilhaft sind die verkleidungselementseitigen ersten Kontakte bügelartig ausgebildet, wodurch ihre elastische Wirkung und damit die Gegenkraft beim formschlüssigen Eingriff der ersten Kontakte auf die zweiten Kontakte vergrößert wird.

Schließlich sind die verkleidungselementseitigen ersten Kontakte in der ersten Ausführungsform der Erfindung mit Kontaktstiften verbunden, welche sich in einen inneren Bereich des Verkleidungselements erstrecken und dort mit den verkleidungselementseitigen Leitungen lösbar verbunden sind. Dadurch wird auf dem Verkleidungselement eine zentrale elektrische Versorgungsstelle geschaffen, auf die flexibel von jeder Position des Verkleidungselements durch Anpassung der verkleidungselementseitigen Leitungen zugegriffen werden kann.

Eine nicht erfindungsgemäße Ausführungsform sieht vor, dass die Kontaktierungseinrichtung tragstrukturseitig mindestens ein nichtleitendes Rampenelement aufweist, auf dem mehrere nebeneinander angeordnete erste Kontakte befestigt sind, die mit den tragstrukturseitigen Leitungen verbunden sind. Auch hierbei ergibt sich wieder der Vorteil einer zentralen Ableitstelle einer tragstrukturseitigen Stromverteilung, welche flexibel über ein anforderungsgerechtes Routing der tragstrukturseitigen Leitungen darstellbar ist. Zudem ist in der zweiten bevorzugten Ausführungsform der Erfindung das Rampenelement quer zur Richtung der Translationsbewegung gegen eine Rückstellkraft bewegbar, wobei durch die Rückstellkraft ferner, analog zur ersten bevorzugten Ausführungsform der Erfindung, verkleidungselementseitige zweite Kontakte auf die tragstrukturseitigen ersten Kontakte bei Erreichen des Formschlusses zwischen Verkleidungselement und Tragstruktur gedrückt werden.

Bevorzugt wird in der nicht erfindungsgemäßen Ausführungsform die Rückstellkraft durch eine an dem Rampenelement befestigte Rückstellfeder erzeugt, wodurch sich die Rückstellkraft einfach durch Variation der Federhärte anforderungsgemäß einstellen lässt. Darüber hinaus ist eine Rückstellfeder schnell austauschbar, falls im Laufe der Nutzungsdauer die Rückstellkraft nachlassen sollte und nicht mehr den Spezifikationen entspricht.

Weiter bevorzugt sind die verkleidungselementseitigen ersten Kontakte an einem an dem Verkleidungselement befestigten Vorsprung angeordnet, welcher eine Schrägfläche aufweist, deren Fläche parallel zur Kontaktfläche des tragstrukturseitigen Rampenelements ausgerichtet ist. Durch eine derartige Ausführung wird die Kontaktfläche geometrisch maximiert und die Formschlussbildung zwischen Tragstruktur und Verkleidungsstruktur begünstigt, so dass eine ausfallsichere Stromübertragung zwischen Tragstruktur und Verkleidungselement gewährleistet werden kann.

Ebenfalls bevorzugt weist das tragstrukturseitige Rampenelement einen Schaft auf, aus dessen freien Ende Anschlussstife herausragen, die mit den ersten Kontakten verbunden sind. Dabei sind das Schaftende und die Anschlussstifte über einen Stecker lösbar miteinander verbunden, während der Stecker wiederum mit den verkleidungselementseitigen Leitungen verbunden ist. Vorteilhaft sind der Schaft und der Stecker mit einem T-förmigen Innenprofil versehen, welches ein Ineinandergreifen von Stecker und Schaft nur in einer bestimmten Position von Verkleidungselement und Tragstruktur zueinander ermöglicht, wodurch ein intuitiver Einbau sichergestellt ist und damit die Gefahr einer elektrischen Falschkontaktierung ausgeschlossen werden können. Idealerweise weist der Stecker an einer Außenseite einen Rasthaken auf, welcher derart ausgeführt und eingerichtet ist, dass er bei Ineinandergreifen von Schaft und Stecker mit einer an dem Schaft angeordneten und zu dem Rasthaken komplementär ausgebildeten Rastnase einen form- und kraftschlüssigen Eingriff bildet, durch den der Montageendzustand zwischen Verkleidungselement und Tragstruktur fixiert ist.

Schließlich ist die nicht erfindungsgemäße Ausführungsform dadurch gekennzeichnet, dass die Anzahl der verkleidungselementseitigen ersten Kontakte der Anzahl der tragstrukturseitigen zweiten Kontakte entspricht.

Weiter ist die Aufgabe mit einer zweiten, nicht erfindungsgemäßen Ausführungsform gelöst, welche vorsieht, dass die verkleidungselementseitige Kontaktierungseinrichtung eine Anzahl in Translationsrichtung verlaufende erste Kontakte aufweist, welche bügelförmig elastisch verformbar ausgebildet sind und auf der Tragstruktur eine gleiche Anzahl sich in Translationsrichtung erstreckende zweite Kontakte angeordnet sind, welche in ebenfalls in Translationsrichtung ausgerichteten Führungskanälen befestigt sind. Die Führungskanäle dienen einer Führung der verkleidungselementseitigen ersten Kontakte bei einer translatorischen Relativbewegung zwischen dem Verkleidungselement und der Tragstruktur auf die zweiten Kontakte und ermöglichen die Herstellung einer elektrisch leitfähigen Verbindung zwischen Verkleidungselement und Tragstruktur. Die Erstreckung der ersten und zweiten Kontakte in Translationsrichtung stellt dabei sicher, dass bereits vor Erreichen der Montageendposition ein elektrischer Kontakt zwischen Verkleidungselement und Tragstruktur besteht.

Weiter vorteilhaft sind die bügelförmigen ersten Kontakte an jeweils einem Ende an dem Verkleidungselement fixiert und liegen an dem jeweils anderen Ende an dem Verkleidungselement auf. Auf diese Weise lassen sich Fertigungstoleranzen in der Lage der tragstrukturseitigen Führungskanäle zueinander ausgleichen und ermöglichen dadurch zuverlässige Kontakteigenschaften.

Zuletzt ist die Fixiereinrichtung zwischen jeweils mindestens einem ersten und einem zweiten Kontakt angeordnet und ermöglicht dadurch eine spiegelsymmetrische Ausrichtung der jeweiligen Kontaktpaare zueinander.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
Fig. 1a einen Vertikalschnitt einer Ausführungsform einer erfindungsgemäßen Vorrichtung zur Veranschaulichung der prinzipiellen Funktionsweise,
Fig. 1b eine isometrische Explosionsansicht einer Ausführungsform einer erfindungsgemäßen Vorrichtung in einer Rückansicht,
Fig. 1c eine isometrische Explosionsansicht einer Ausführungsform einer erfindungsgemäßen Vorrichtung in einer Vorderansicht,
Fig.1d eine isometrische Ansicht einer Ausführungsform einer erfindungsgemäßen Vorrichtung in zusammengefügtem Zustand in einer Rückansicht,
Fig. 1e eine isometrische Ansicht einer Ausführungsform einer erfindungsgemäßen Vorrichtung in zusammengefügtem Zustand in einer Vorderansicht,
Fig. 2a einen Vertikalschnitt einer nicht erfindungsgemäßen Vorrichtung zur Veranschaulichung der prinzipiellen Funktionsweise,
Fig. 2b eine isometrische Explosionsansicht einer nicht erfindungsgemäßen Vorrichtung in einer Rückansicht,
Fig. 2c eine isometrische Explosionsansicht einer nicht erfindungsgemäßen Vorrichtung in einer Vorderansicht,
Fig. 2d eine isometrische Ansicht einer nicht erfindungsgemäßen Vorrichtung in zusammengefügtem Zustand in einer Rückansicht,
Fig. 2e eine isometrische Ansicht einer nicht erfindungsgemäßen Vorrichtung in zusammengefügtem Zustand in einer Vorderansicht,
Fig. 3a einen Vertikalschnitt einer zweiten, nicht erfindungsgemäßen Vorrichtung zur Veranschaulichung der prinzipiellen Funktionsweise,
Fig. 3b ein Verkleidungselement als Teilkomponente einer zweiten, nicht erfindungsgemäßen Vorrichtung in einer Rückansicht,
Fig. 3c eine Tragstruktur als Teilkomponente einer zweiten, nicht erfindungsgemäßen Vorrichtung in einer Vorderansicht,
Fig. 3d eine isometrische Ansicht einer zweiten, nicht erfindungsgemäßen Vorrichtung in zusammengefügtem Zustand in einer Rückansicht, sowie
Fig. 3e eine isometrische Ansicht einer zweiten, nicht erfindungsgemäßen Vorrichtung in zusammengefügtem Zustand in einer Vorderansicht.

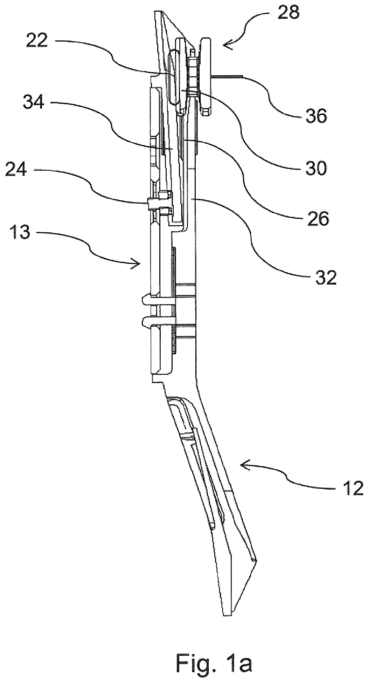

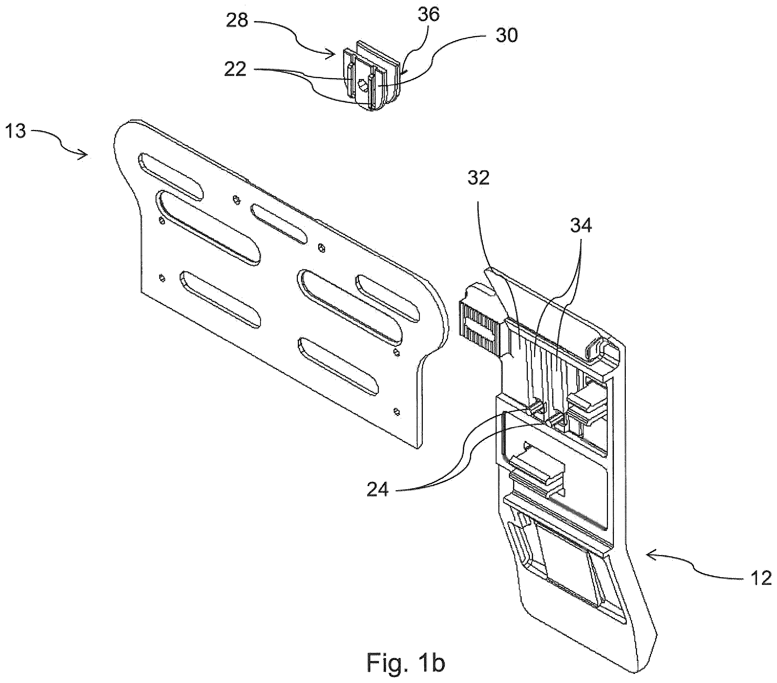

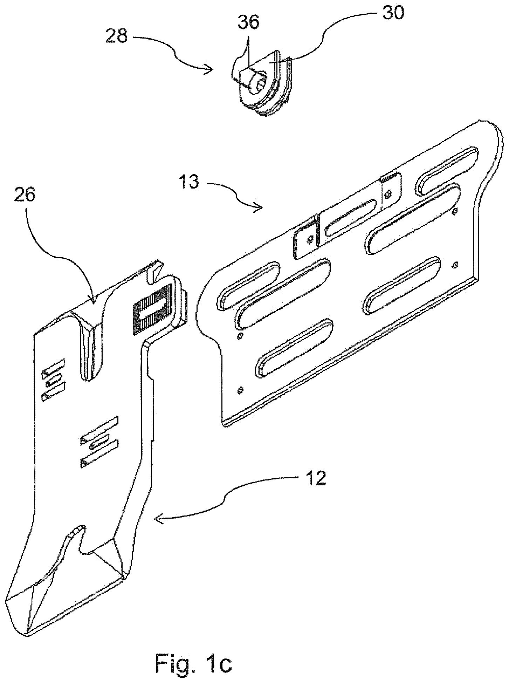

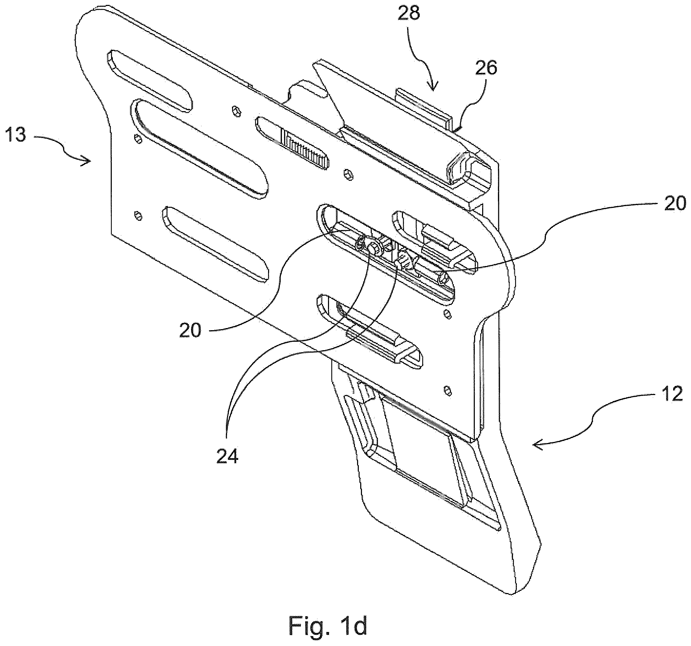

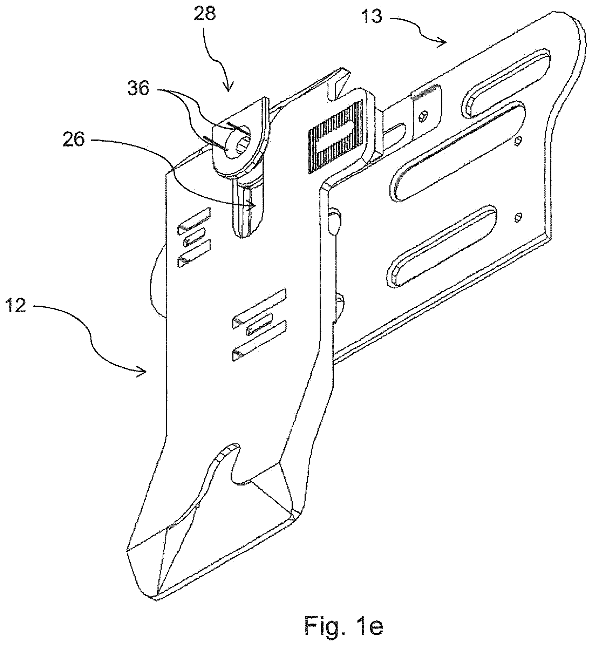

In Fig. 1a ist die prinzipielle Funktionsweise einer Ausführungsform einer erfindungsgemäßen Vorrichtung in einem Vertikalschnitt dargestellt. Eine Tragstruktur 12 ist form- und kraftschlüssig an eine Flugzeugstruktur 13 gefügt und dient als Flanschmaterial zur Aufnahme eines Fixierelements 28, das vorzugsweise als Gleitstück ausgeführt und ausgebildet ist. Über eine in der Tragstruktur 12 angeordnete mittlere Führung, die vorteilhaft 11,5 mm breit ist, wird das als Gleitstück ausgebildete Fixierelement 28, welches bevorzugt einen Durchmesser von 10 mm aufweist, mit einer Fügetoleranz von 1,5 mm translatorisch in Vertikalrichtung geführt und formschlüssig in der Tragstruktur 12 bei Erreichen einer Montageendposition fixiert. Die Flugzeugstruktur 13 ist eine Art Grundplatte, die mittels Niet-, Schraub- oder Schweißverbindung an einem Flugzeugstrukturbauteil, insbesondere an einem Spant, fixiert ist. Das Fixierelement ist wiederum seinerseits an einem in Fig. 1a nicht gezeigten Verkleidungselement 10 befestigt, welches die Flugzeugstruktur 13 in Richtung einer Flugzeugkabine als Verkleidungspaneel, bevorzugt als Seitenverkleidungspaneel, abschließt. Ein solches Seitenverkleidungspaneel ist beispielsweise in der Druckschrift DE 10 2011 009 815 A1 dargestellt. Vorteilhaft sind an dem in Fig. 1a nicht dargestellten Verkleidungselement 10 vier Fixierelemente 28 angeordnet, welche mit vier Tragstrukturen 12 in einen formschlüssigen Eingriff bringbar sind, wobei die vier Tragstrukturen 12 jeweils einzeln, alternativ auch paarweise, form- und kraftschlüssig an der Flugzeugstruktur 13 befestigt sind. Das Fixierelement 28 umfasst weiter einen Kopf 30, welcher derart beschaffen ist, dass er mit einem an einer Rückwand 32 der Tragstruktur 12 angeordneten hinterschnittenen Vertikalschlitz 26 durch translatorische Relativbewegung der Tragstruktur 12 zu dem Fixierelement 28 in einen formschlüssigen Eingriff bringbar ist und auf diese Weise eine formschlüssige Verbindung zwischen dem Fixierelement 28 und der Tragstruktur 12 herstellt. Um die erhöhten mechanischen Belastungen, die mit der beschriebenen Funktionsweise der Formschlussbildung einhergehen, ertragen zu können, ist die Tragstruktur 12 an kraftübertragenden Fügestellen materialseitig aufgedickt bzw. konstruktiv verstärkt, vorzugsweise durch zusätzliche Versteifungsrippen. In gefügtem Zustand existiert zudem ein Spalt zwischen dem in Fig. 1a nicht dargestellten Verkleidungselement 10 und der Tragstruktur 12, welcher in Richtung einer Flugzeughochachse nach unten durch ein zweites Verkleidungselement, das vorzugsweise als Dado-Panel ausgebildet ist, überlappt wird. An dem Kopf 30 und damit verkleidungselementseitig sind mehrere erste Kontakte 22 angeordnet, welche vorteilhaft elastisch bügelförmig ausgebildet sind. Mit den ersten Kontakten 22 sind in dem Fixierelement 28 weiter Kontaktstifte 36 verbunden, welche sich in einen Innenbereich des in Fig. 1a nicht dargestellten Verkleidungselements 10 erstrecken und dort mit in Fig. 1a ebenfalls nicht sichtbaren verkleidungselementseitigen Leitungen 18 vorteilhaft durch THT- bzw. SMT-Lötverfahren verbunden sind, wodurch eine Stromversorgung bereitgestellt wird. Alternativ ist es denkbar, eine elektrische Kontaktierung zwischen dem Fixierelement 28 und dem in Fig. 1a nicht dargestellten Verkleidungselement 10 mittels in einem Sockel des Fixierelements 28 angeordneten Kontaktbuchsen mit integrierten Kontaktstiften vorzusehen, wobei die Kontaktbuchsen die Kontaktstifte des Fixierelements 28 in das in Fig. 1a nicht gezeigte Verkleidungselement 10 leiten. Die ersten Kontakte 22 korrespondieren weiter mit streifenartig ausgeführten zweiten Kontakten 24, welche tragstrukturseitig in der Rückwand 32 des Vertikalschlitzes 26 angeordnet sind und bei translatorischer Relativbewegung der Tragstruktur 12 zu dem Fixierelement 28 einen elektrischen Kontakt zwischen dem Fixierelement 28 und der Tragstruktur 12 herstellen. Die zweiten Kontakte 24 sind in Längsschlitzen 34 an der Rückwand 32 der Tragstruktur 12 durch Verschrauben unter Zuhilfenahme von tragstrukturseitigen Gewindestiften befestigt, wodurch sie nicht nur keinen zusätzlichen Bauraum benötigen und das Verkleidungselement nicht weiter in Richtung der Flugzeugkabine herausragen lassen, sondern darüber hinaus die strukturellen Versteifungen bzw. Verstärkungen an kraftübertragenden Stellen der Tragstruktur 12 in Flugzeugkabinenrichtung kompensieren. Tragstrukturseitig sind die zweiten Kontakte 24 an der Rückseite 32 der Tragstruktur mit in Fig. 1a ebenfalls nicht sichtbaren tragstrukturseitigen Anschlussleitungen 20 vorteilhaft über Kabelschuhe, alternativ über Stecker, verbunden, welche wiederum an ein Flugzeugbordnetz angeschlossen sind und aus diesem eine Stromversorgung beziehen, die durch die elektrische Kontaktierung der Tragstruktur 12 mit dem Fixierelement 28 an dieses bzw. an das mit dem Fixierelement 28 verbundene Verkleidungselement übertragbar ist. Rückseitig an der Tragstruktur sind die zweiten Kontakte 24 mittels einer auf die zweiten Kontakte geklemmten Isolierklappe gegen Berührung und Kurzschluss geschützt. Durch die streifenartige Ausgestaltung der zweiten Kontakte 24 und die in Translationsrichtung bügelförmig ausgebildeten ersten Kontakte 22 kommt es zudem bereits vor Erreichen einer Montageendposition des Fixierelements 28 in dem hinterschnittenem Vertikalschlitz 26 zu einem elektrischen Kontakt zwischen der Tragstruktur 12 und dem Fixierelement 28, wobei durch die Elastizität der Bügelform die ersten Kontakte 22 gegen die zweiten Kontakte 24 gedrückt werden und den elektrischen Kontakt durch die beschriebene Federwirkung der Bügelform der ersten Kontakte 22 zuverlässig selbst bei mechanischer Beanspruchung der erfindungsgemäßen Vorrichtung aufrechterhalten. Fig. 1b und Fig. 1c zeigen jeweils in einer Explosionsdarstellung die für die Funktionsweise der Ausführungsform einer erfindungsgemäßen Vorrichtung notwendigen Komponenten, während in Fig. 1d und Fig. 1e das erläuterte Konzept der Ausführungsform einer erfindungsgemäßen Vorrichtung in zusammengefügtem Zustand darstellen.

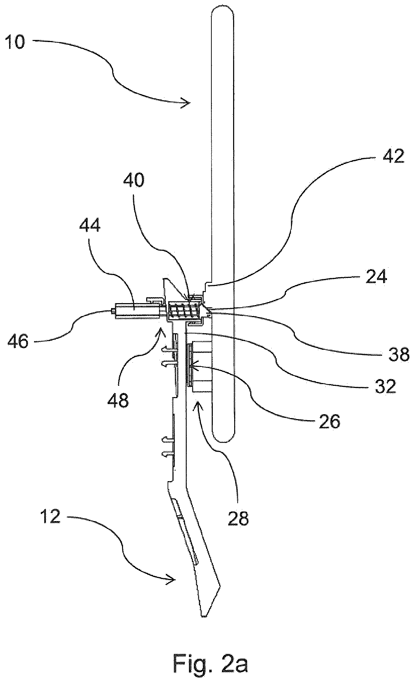

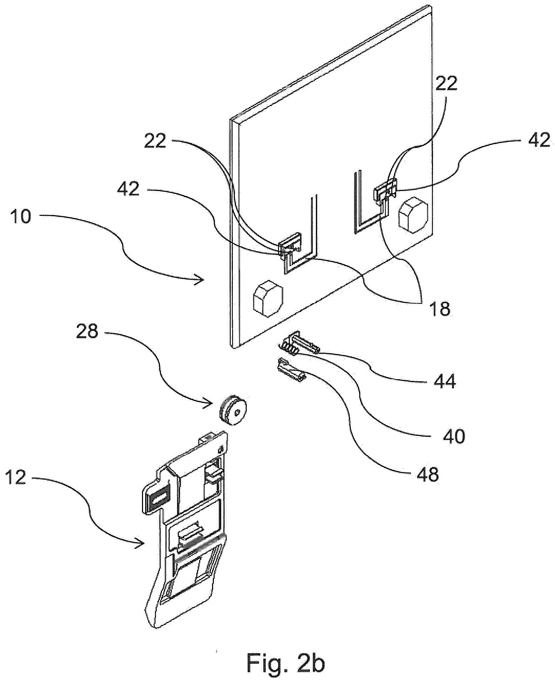

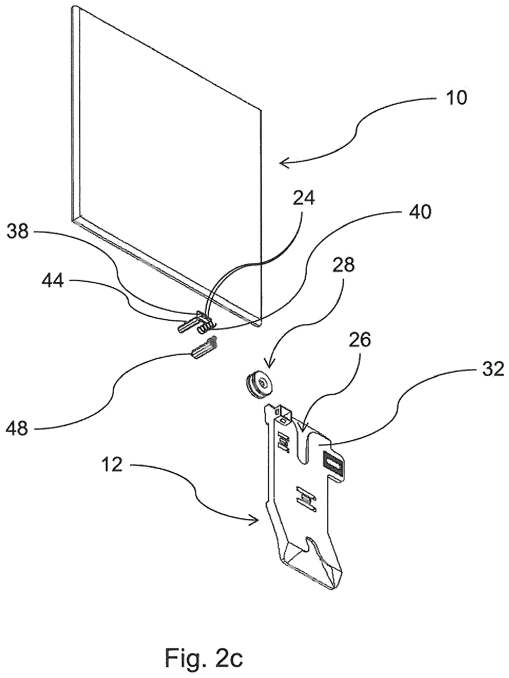

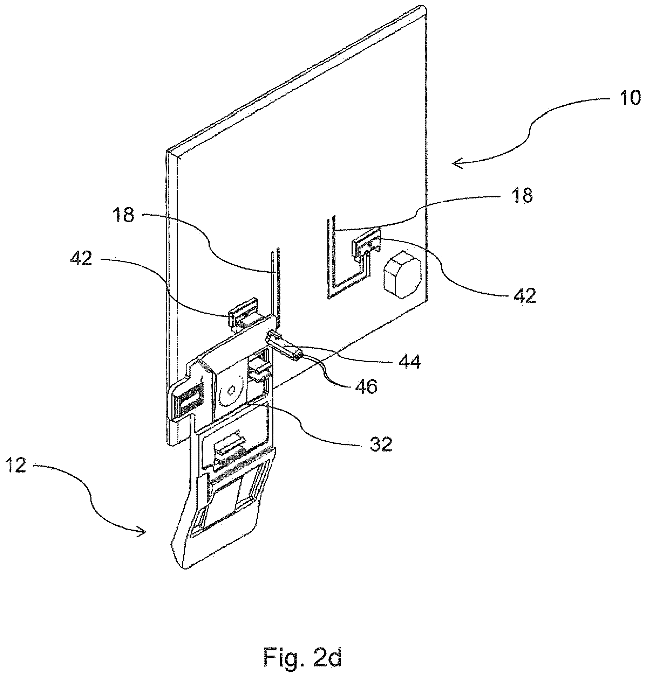

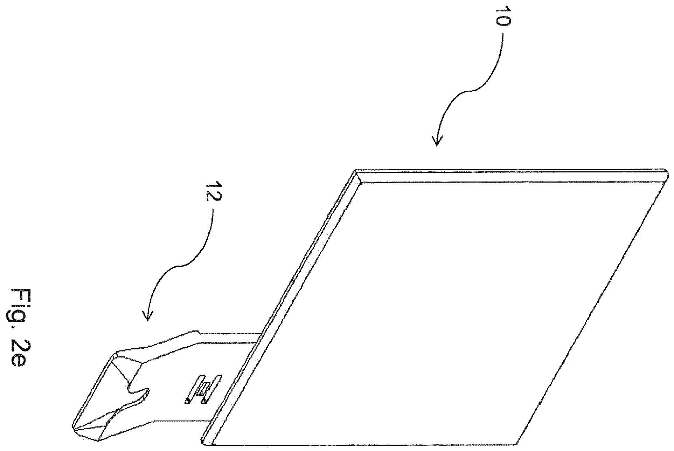

Fig. 2a zeigt die prinzipielle Funktionsweise einer alternativen, nicht erfindungsgemäßen Vorrichtung, wiederum in einem Vertikalschnitt. Analog zur Ausführungsform einer erfindungsgemäßen Vorrichtung wird in dieser Weiterbildung über ein Fixierelement 28, an dem ein Verkleidungselement 10 angeordnet ist, durch translatorische Relativbewegung des Fixierelements 28 zu einer Tragstruktur 12 eine formschlüssige Verbindung zwischen dem Verkleidungselement 10 und der Tragstruktur 12, wieder mit einer Fügetoleranz von 1,5 mm in horizontaler Richtung, hergestellt, welche ihrerseits wiederum an einer in Fig. 2a nicht dargestellten Flugzeugstruktur 13 form- und kraftschlüssig befestigt ist. Auch in dieser nicht erfindungsgemäßen Vorrichtung sind alle kraftübertragenden Teilkomponenten an der Tragstruktur 12 mechanisch verstärkt. Die elektrische Kontaktierung zwischen Tragstruktur 12 und Verkleidungselement 10 erfolgt über mindestens ein Rampenelement 38, welches tragstrukturseitig angeordnet und nichtleitend ausgebildet ist. An dem Rampenelement 38 sind zweite Kontakte 24 angebracht, welche ihrerseits wieder mit in Fig. 2a nicht sichtbaren tragstrukturseitigen Leitungen 20 verbunden sind. Das Rampenelement 38 ist dabei bevorzugt quer zur Translationsrichtung gegen eine Rückstellkraft bewegbar, die von einer Rückstellfeder 40 erzeugt wird. Vorzugsweise weist das Rampenelement 38 einen Schaft 44 auf, aus dessen freiem Ende Anschlussstifte 46 herausragen, welche bei einem formschlüssigem Eingriff zwischen Tragstruktur 12 und Fixierelement 28 mit verkleidungselementseitigen ersten Kontakten 22, welche vorteilhaft auf einem mit einer zu dem Rampenelement 38 komplementären Schrägfläche ausgestattetem und als Kontaktsockel ausgebildetem Vorsprung 42 durch Verschrauben befestigt sind, zusammenwirken und einen elektrischen Kontakt herstellen, welcher durch die Rückstellkraft der Rückstellfeder 40 gesichert wird. Dabei sind ein Ende des Schafts 44 und die Anschlussstifte 46 über einen Stecker 48 lösbar miteinander verbunden, wobei der Stecker 48 wiederum an in Fig. 2a nicht sichtbaren verkleidungselementseitige Leitungen 18 angeschlossen ist. Zur Sicherung gegen Falschkontaktierung sind der Schaft 44 und der Stecker 48 mit einem T-förmigen Innenprofil versehen, welches ein Ineinandergreifen von Stecker 48 und Schaft 44 nur in einer bestimmten Position von Verkleidungselement 10 und Tragstruktur 12 zueinander ermöglicht. Darüber hinaus weist der Stecker 48 an einer Außenseite einen Rasthaken auf, wobei der Rasthaken bei Ineinandergreifen von Schaft 44 und Stecker 48 mit einer an dem Schaft 44 angeordneten und zu dem Rasthaken komplementär ausgebildeten Rastnase einen form- und kraftschlüssigen Eingriff bildet, durch den der Montageendzustand zwischen Verkleidungselement 10 und Tragstruktur 12 fixiert ist. Verkleidungselementseitig sind die ersten Kontakte 22 auch in dieser nicht erfindungsgemäßen Vorrichtung mit in Fig. 2a nicht dargestellten verkleidungselementseitigen Leitungen 18 verbunden. Fig. 2b und Fig. 2c zeigen wieder eine Explosionsdarstellung der in Fig. 2a erläuterten Bestandteile dieser nicht erfindungsgemäßen Vorrichtung, während eine zusammengefügte Version in Fig. 2d und Fig. 2e gezeigt ist.

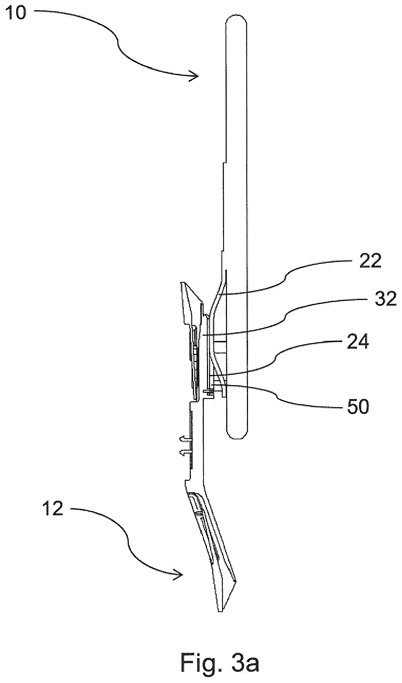

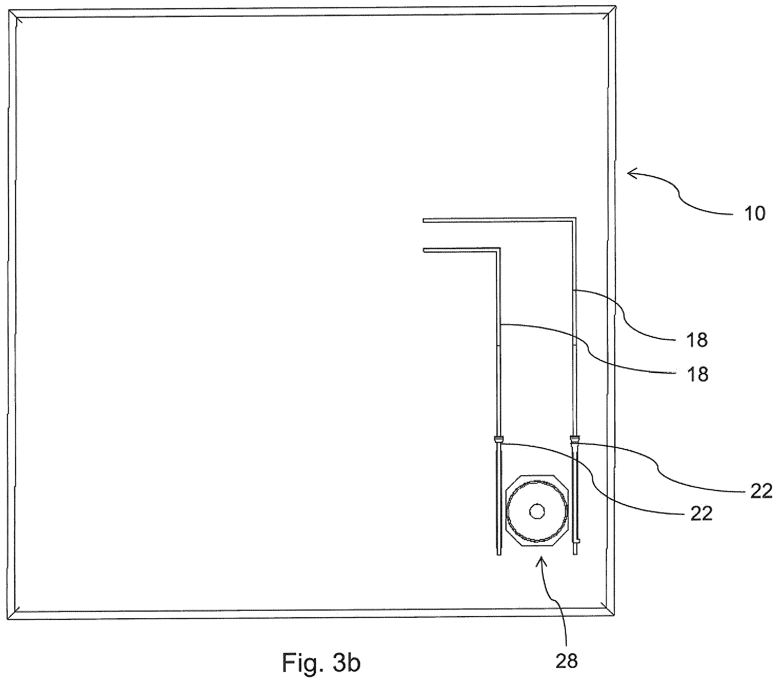

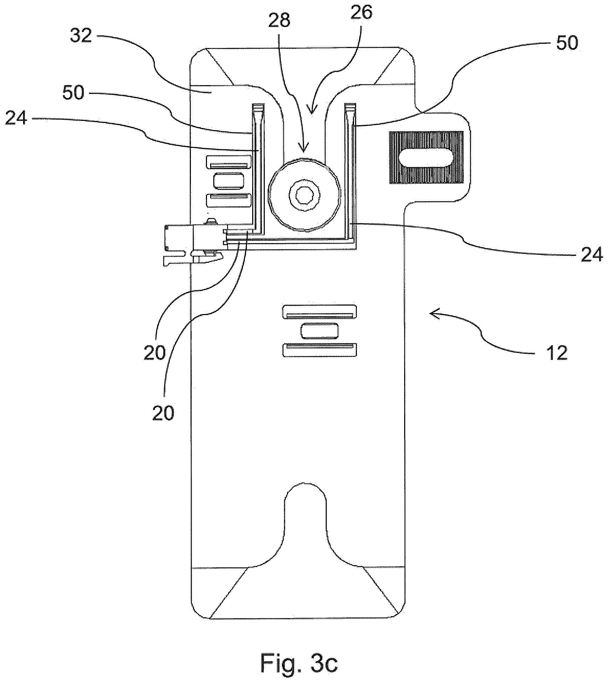

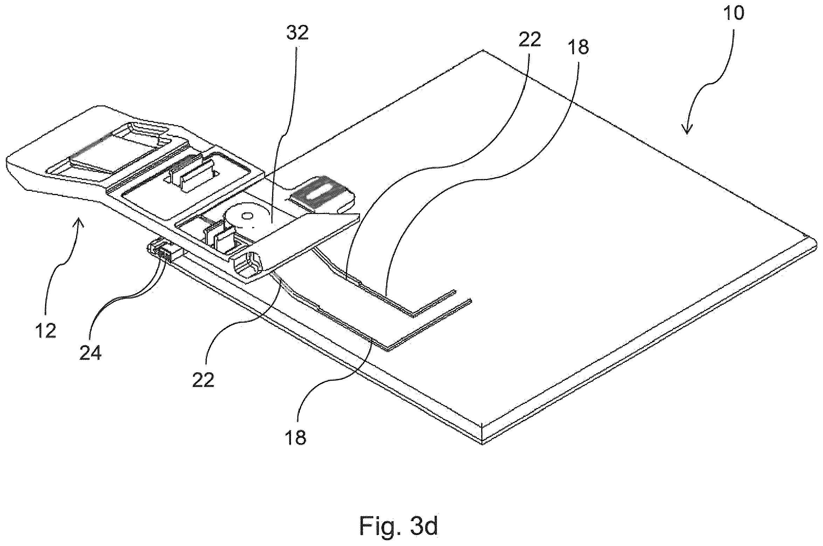

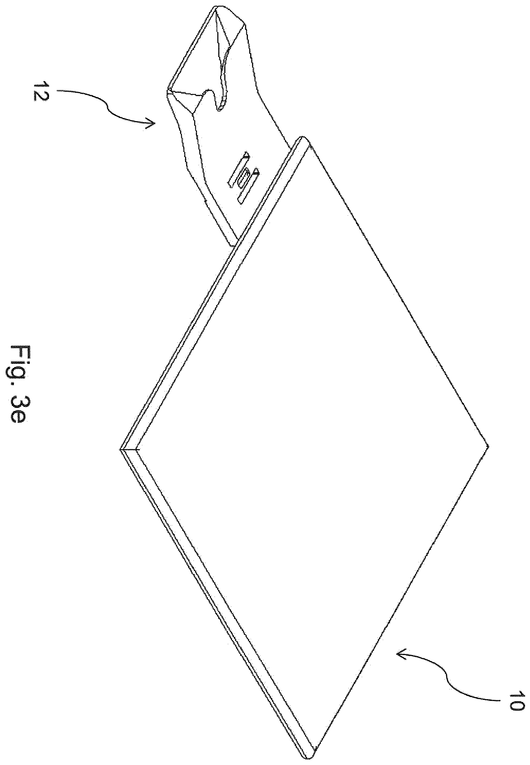

In Fig. 3a schließlich ist die prinzipielle Funktionsweise einer zweiten, nicht erfindungsgemäßen Vorrichtung wieder in einem Vertikalschnitt, in Fig. 3b und Fig. 3c ergänzend hierzu in Teilkomponenten der zweiten, nicht erfindungsgemäßen Vorrichtung in einer Rück- bzw. Vorderansicht gezeigt. Wie in den vorausgehenden beiden Varianten wird auch in dieser zweiten, nicht erfindungsgemäßen Vorrichtung ein formschlüssiger Kontakt zwischen einer Tragstruktur 12, welche ihrerseits wieder an einer in Fig. 3a bis Fig. 3c nicht sichtbaren Flugzeugstruktur 13 form- und kraftschlüssig befestigt ist, und einem in Fig. 3a ebenfalls nicht sichtbarem Fixierelement 28 hergestellt, wobei an dem Fixierelement 28 wieder ein Verkleidungselement 10 angeordnet ist und die Formschlussbildung über einen an einer Rückseite 32 der Tragstruktur angeordneten und in Fig. 3a und Fig. 3b nicht sichtbaren hinterschnittenem Vertikalschlitz 26 erfolgt, wieder unter Beibehaltung einer Fügetoleranz von 1,5 mm in horizontaler Richtung. In dieser zweiten, nicht erfindungsgemäßen Vorrichtung umfasst das Verkleidungselement 10 eine Anzahl in Translationsrichtung sich erstreckende, erste Kontakte 22, welche bügelförmig elastisch ausgebildet sind und mit einer gleichen Anzahl sich ebenfalls in Translationsrichtung erstreckenden zweiten Kontakten 24 korrespondieren, die wieder auf der Tragstruktur 12 in Führungskanälen 50 angebracht sind und bei Ineinandergreifen der Tragstruktur 12 mit dem Verkleidungselement 10 einen elektrischen Kontakt zwischen der Tragstruktur 12 und dem Verkleidungselement 10 herstellen. Die Führungskanäle 50 werden durch gezieltes Aufdicken der Tragstruktur 12 gebildet und nehmen durch Verkleben oder Verklemmen der zweiten Kontakte 24 diese in sich in jeweils zu den zweiten Kontakten 24 korrespondierend ausgebildeten Vertiefungen auf, nachdem die zweiten Kontakte 24 zuvor in einer Bohrung, die jeweils tragstrukturseitig mit Anschlusssteckern vorteilhaft stoffschlüssig über SMT- oder THT-Lötverfahren, alternativ form- und kraftschlüssig mittels Crimp-Kontakten, verbunden sind, in den Führungskanälen 50 fixiert worden sind. Verkleidungselementseitig sind die ersten Kontakte 22 jeweils an einem Ende festlagerartig mit dem Verkleidungselement 10 und dort mit in Fig. 3a und Fig. 3c nicht sichtbaren verkleidungselementseitigen Leitungen 18 verbunden, während die ersten Kontakte 22 an dem jeweils anderen Ende loslagerartig an dem Verkleidungselement 10 anliegen. Die zu den ersten Kontakten 22 korrespondierenden zweiten Kontakte 24 sind tragstrukturseitig in Führungskanälen 50 untergebracht, welche die loslagerartig befestigten Enden der ersten Kontakte 22 bei der Formschlussbildung durch translatorische Relativbewegung zwischen der Tragstruktur 12 und dem Verkleidungselement 10 über die zweiten Kontakte 24 lenken, wobei gleichzeitig durch die elastische bügelförmige Ausgestaltung der ersten Kontakte 22 ein Anpressen der ersten Kontakte 22 auf die zweiten Kontakte 24 erfolgt. In einer Weiterbildung dieser zweiten, nicht erfindungsgemäßen Vorrichtung sind die verkleidungselementseitigen ersten Kontakte 22 jeweils beidseitig des Fixierelements 28 angeordnet und ermöglichen so eine symmetrische Positionierung sowie eine symmetrische und damit leichter zu erreichende Form- bzw. Kraftschlussbildung der ersten Kontakte 22 zu den zweiten Kontakten 24. Wie in den vorgehenden Varianten zeigen Fig. 3d und Fig. 3e einen zusammengefügten Zustand der zweiten, nicht erfindungsgemäßen Vorrichtung.

Obwohl die Erfindung im Detail durch das Ausführungsbeispiel der Figuren 1a-e näher illustriert und erläutert worden ist, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

### Bezugszeichenliste

- 10: Verkleidungselement
- 12: Tragstruktur
- 13: Flugzeugstruktur
- 18: Verkleidungselementseitige Leitungen
- 20: Tragstrukturseitige Anschlussleitungen
- 22: Erster Kontakt
- 24: Zweiter Kontakt
- 26: Hinterschnittener Vertikalschlitz
- 28: Fixierelement
- 30: Kopf
- 32: Rückwand
- 34: Längsschlitz
- 36: Kontaktstift
- 38: Rampenelement
- 40: Rückstellfeder
- 42: Vorsprung
- 44: Schaft
- 46: Anschlussstift
- 48: Stecker
- 50: Führungskanal

## Patentansprüche

1. Luftfahrzeug, mit einer Flugzeugstruktur (13), an welcher eine Tragstruktur (12) befestigt ist; mit einem Verkleidungselement (10); und mit einer Vorrichtung zur Fixierung und elektrischen Kontaktierung des Verkleidungselements (10) des Luftfahrzeugs an der Tragstruktur (12), die an der Flugzeugstruktur (13) befestigt ist, umfassend eine Fixiereinrichtung zur lösbaren Fixierung des Verkleidungselements (10) an der Tragstruktur (12) und eine Kontaktierungseinrichtung zur Bereitstellung mehrerer elektrischer Kontakte zwischen verkleidungselementseitigen Leitungen (18) und tragstrukturseitigen Anschlussleitungen (20), die Fixiereinrichtung mittels einer translatorischen Relativbewegung zwischen Verkleidungselement (10) und Tragstruktur (12) in einen formschlüssigen Eingriff bringbar ist, und die Kontaktierungseinrichtung mindestens zwei verkleidungselementseitige erste Kontakte (22) und die gleiche Anzahl damit kooperierende tragstrukturseitige zweite Kontakte (24) aufweist, die bei der translatorischen Relativbewegung jeweils miteinander in elektrischen Kontakt bringbar sind, wobei die ersten Kontakte (22) mit den verkleidungselementseitigen Leitungen (18) und die zweiten Kontakte (24) mit den tragstrukturseitigen Anschlussleitungen (20) verbunden sind, **dadurch gekennzeichnet, dass** die Tragstruktur (12) eine Trägerplatte mit einem hinterschnittenen Vertikalschlitz (26) aufweist, und am Verkleidungselement (10) ein einführbares Fixierelement (28) mit einem in dem Hinterschneidungsbereich angeordneten Kopf (30) angebracht ist, die Kontaktierungseinrichtung mehrere auf dem Kopf (30) angeordnete elastisch abstehende erste Kontakte (22) aufweist, und die Kontaktierungseinrichtung in der Rückwand (32) des Vertikalschlitzes (26) angeordnete mit den ersten Kontakten (22) zusammenwirkende zweite Kontakte (24) umfasst, und wobei die zweiten Kontakte (24) in Längsschlitzen (34) angeordnet sind, die in der Rückwand (32) des hinterschnittenen Vertikalschlitzes (26) ausgebildet sind.

2. Luftfahrzeug nach Anspruch 1, **dadurch gekennzeichnet, dass** das Verkleidungselement (10) ein Verkleidungspaneel, insbesondere eine Seitenverkleidungspaneel, ist.

3. Luftfahrzeug nach Anspruch 1, **dadurch gekennzeichnet, dass** die zweiten Kontakte (24) streifenartig ausgebildet sind.

4. Luftfahrzeug nach einem der Ansprüche 1 und 3, **dadurch gekennzeichnet, dass** die ersten Kontakte (22) als Bügel ausgebildet sind.

5. Luftfahrzeug nach Anspruch 4, **dadurch gekennzeichnet, dass** die ersten Kontakte (22) mit Kontaktstiften (36) verbunden sind, die sich in das Innere des Verkleidungselements (10) erstrecken und dort mit den verkleidungselementseitigen Leitungen (18) lösbar verbunden sind.

## Claims

1. Aircraft, having an aircraft structure (13) to which a supporting structure (12) is fastened; having a cladding element (10); and having an apparatus for fixing and making electrical contact with the cladding element (10) of the aircraft on the supporting structure (12) which is fastened to the aircraft structure (13), comprising a fixing device for releasably fixing the cladding element (10) to the supporting structure (12) and comprising a contact-making device for providing a plurality of electrical contacts between cladding element-side lines (18) and supporting structure-side connection lines (20), it being possible to bring the fixing device into interlocking engagement by means of a translatory relative movement between the cladding element (10) and the supporting structure (12), and the contact-making device having at least two cladding element-side first contacts (22) and the same number of supporting structure-side second contacts (24) which cooperate with the said first contacts and can each be brought into electrical contact with one another during the translatory relative movement, wherein the first contacts (22) are connected to the cladding element-side lines (18) and the second contacts (24) are connected to the supporting structure-side connection lines (20), **characterized in that** the supporting structure (12) has a carrier plate with an undercut vertical slot (26), and an insertable fixing element (28) with a head (30) that is arranged in the undercut region is attached to the cladding element (10), the contact-making device has a plurality of elastically protruding first contacts (22) which are arranged on the head (30), and the contact-making device comprises second contacts (24) which are arranged in the rear wall (32) of the vertical slot (26) and interact with the first contacts (22), and wherein the second contacts (24) are arranged in longitudinal slots (34) which are formed in the rear wall (32) of the undercut vertical slot (26).

2. Aircraft according to Claim 1, **characterized in that** the cladding element (10) is a cladding panel, in particular a side cladding panel.

3. Aircraft according to Claim 1, **characterized in that** the second contacts (24) are of strip-like design.

4. Aircraft according to either of Claims 1 and 3, **characterized in that** the first contacts (22) are designed as clips.

5. Aircraft according to Claim 4, **characterized in that** the first contacts (22) are connected to contact pins (36) which extend into the interior of the cladding element (10) and are releasably connected to the cladding element-side lines (18) there.

## Revendications

1. Véhicule aérien, comprenant une structure (13) d'aéronef, à laquelle est fixée une structure porteuse (12) ; comprenant un élément d'habillage (10) ; et comprenant un arrangement de fixation et de mise en contact électrique de l'élément d'habillage (10) du véhicule aérien à la structure porteuse (12), qui est fixée à la structure (13) d'aéronef, comportant un dispositif de fixation destiné à la fixation amovible de l'élément d'habillage (10) à la structure porteuse (12) et un dispositif de mise en contact destiné à mettre à disposition plusieurs contacts électriques entre des lignes (18) côté élément d'habillage et des lignes de raccordement (20) côté structure porteuse, le dispositif de fixation pouvant être amené dans une prise par complémentarité de formes au moyen d'un mouvement relatif de translation entre l'élément d'habillage (10) et la structure porteuse (12), et le dispositif de mise en contact possédant au moins deux premiers contacts (22) côté élément d'habillage et le même nombre de deuxièmes contacts (24) coopérant avec ceux-ci côté structure porteuse qui, lors du mouvement relatif de translation, peuvent respectivement être amenés en contact électrique les uns avec les autres, les premiers contacts (22) étant reliés aux lignes (18) côté élément d'habillage et les deuxièmes contacts (24) aux lignes de raccordement (20) côté structure porteuse, **caractérisé en ce que** la structure porteuse (12) possède une plaque porteuse pourvue d'une fente verticale (26) en contre-dépouille, et un élément de fixation (28) insérable, muni d'une tête (30) disposée dans la zone de contre-dépouille, est disposé au niveau de l'élément d'habillage (10), le dispositif de mise en contact possède plusieurs premiers contacts (22) faisant saillie de manière élastique disposés sur la tête (30), et le dispositif de mise en contact comporte des deuxièmes contacts (24) disposés dans la paroi arrière (32) de la fente verticale (26) qui coopèrent avec les premiers contacts (22), et les deuxièmes contacts (24) étant disposés dans des fentes allongées (34) qui sont formées dans la paroi arrière (32) de la fente verticale (26) en contre-dépouille.

2. Véhicule aérien selon la revendication 1, **caractérisé en ce que** l'élément d'habillage (10) est un panneau d'habillage, notamment un panneau d'habillage latéral.

3. Véhicule aérien selon la revendication 1, **caractérisé en ce que** les deuxièmes contacts (24) sont configurés en forme de bandes.

4. Véhicule aérien selon l'une des revendications 1 et 3, **caractérisé en ce que** les premiers contacts (22) sont configurés en forme d'étriers.

5. Véhicule aérien selon la revendication 4, **caractérisé en ce que** les premiers contacts (22) sont reliés à des broches de contact (36) qui s'étendent dans l'intérieur de l'élément d'habillage (10) et y sont reliées de manière amovible aux lignes (18) côté élément d'habillage.
